Europäisches Patentamt

European Patent Office

Office européen des brevets

(19)

(11) Publication number: **0 020 833**
**B1**

# EUROPEAN PATENT SPECIFICATION

(12)

(45) Date of publication of patent specification: **13.07.83**

(51) Int. Cl.³: **F 16 J 13/00**

(21) Application number: **79301229.5**

(22) Date of filing: **26.06.79**

(54) **Closure assembly.**

(43) Date of publication of application:
**07.01.81 Bulletin 81/1**

(45) Publication of the grant of the patent:
**13.07.83 Bulletin 83/28**

(84) Designated Contracting States:
**AT BE CH DE FR GB IT NL SE**

(56) References cited:
**FR - A - 1 050 162**
**US - A - 3 193 662**

(73) Proprietor: **ROSAN ENGINEERING CORP**
**2841 West Coast Highway**
**Newport Beach, California 92663 (US)**

(72) Inventor: **Rosán, Jnr, José**
**2841 West Coast Highway**
**Newport Beach California 92663 (US)**

(74) Representative: **MATTHEWS HADDAN & CO**
**Haddan House 33 Elmfield Road**
**Bromley, Kent BR1 1SU (GB)**

Courier Press, Leamington Spa, England.

Closure assembly

## Field of the invention

This invention relates to closures for blind wall installation. It particularly relates to such closures which are leak proof and in addition to providing a seal to repair or close an opening, can form a workpiece to which instruments, tubing or attachment means can be connected.

## Description of the prior art

The prior art discloses devices which are designed to be installed in blind walls or closed receptacles. Some of these devices utilize movable arms or toggle like inner parts which after insertion through a hole in the wall are somehow engaged with the inner surface and cooperate with external fasteners to secure the assembly to the wall. Such a device is disclosed by Byrin in US—A—2,360,395. Others like Demyon US—A—3,401,958 and Kern US—A—3,244,056 use inner flanges which are shaped so as to be inserted in a circular opening. After insertion they are rotated so that portions of the flange overlap the opening. When tightened against a blind wall by the cooperative action of an outer flange and a trapped sealing means a secure assembly is achieved. Brandt in US—A—3,193,662 utilizes an elliptical opening in a tank wall, elliptical inner and outer flanges and a threaded boss extending from said inner flange through said outer flange, as does the present invention. However this construction involves the use of a specially moulded sealing member and the boss and outer flange are not designed for the transmission of high clamping forces to ensure good sealing.

French Patent Specification 1050162 (Amathieu) shows a very complicated structure in which the inner flange can be inserted through the opening and rotated to cover the opening and the inner flange carries two solid pins having tapped holes to receive screws (9) to contain a cap (10) which urges springs (8) which hold the inner and outer flanges together. the inner flange is dished and extends through the opening which makes the use of a flat outer flange plate impossible and thus the outer flange plate is of a deep dish form.

## Summary of the invention

The invention as defined in Claim 1 provides for a simple and reliable construction of closure particularly adapted to allow quick and effective blind-wall installation.

As an example for illustrative purposes only, a preferred embodiment of the invention is illustrated in the attached drawings.

## Brief description of the drawings

Fig. 1 is an exploded view of a wall opening, the flange sealing means and other components of this invention,

Fig. 2 is a sectional view along 1—1,

Fig. 3 is an exploded view of another embodiment of the invention showing an easily formed opening in a wall with the important characteristics of an ellipse but not truly elliptical.

## Description of the preferred embodiment

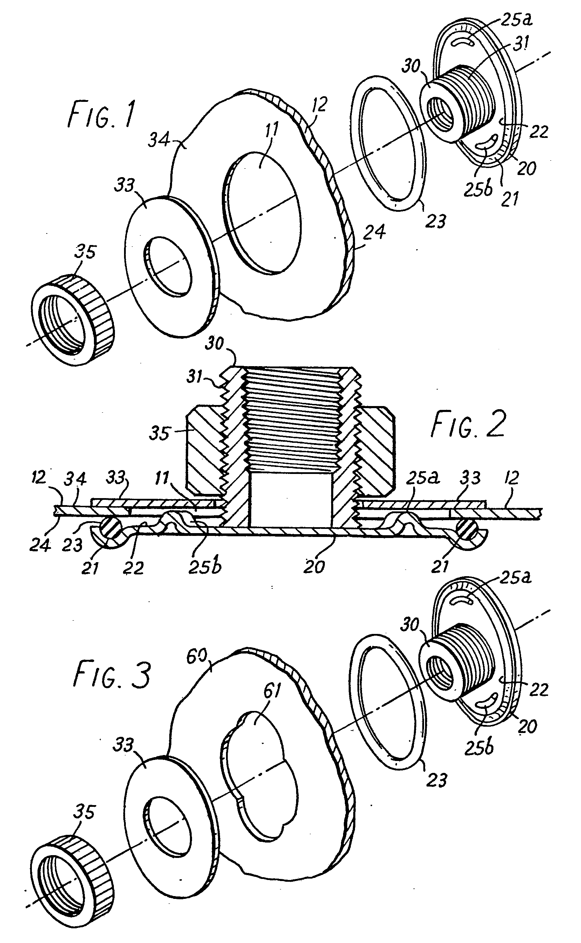

In Figs. 1 and 2 an elliptical opening 11 is cut in the blind wall 12 which is to be repaired or into which a fitting, connection or other device is to be installed. The opening is to be of dimensions such that the largest diameter is greater than the smallest diameter of an elliptical inner flange 20. The elliptical inner flange 20 is formed with an elliptical groove 21 located on the periphery of the flange surface 22. In the elliptical groove 21 sealing means 23 is placed. In this embodiment an elliptical "O" ring 23, is illustrated. However, other sealing means can be used satisfactorily. A bushing 30 with external threads 31 is attached to the flange at a 90° angle to the surface containing the groove, for communication or attachment purposes. A fastener and bolt combination could be used also. Dimples 25a and 25b assist in locating the flange onto the blind wall and prevent rotation when the parts are assembled. Elliptical support flange 33 is fitted over the bushing and seats against the outer wall 34. Attachment means 35, here illustrated by a nut, is rotated tightly on the external threads 31 of bushing 30 drawing the inner flange 20 against the inner wall surface 24. The sealing means 23 in annular groove 21 coacts with inner wall 24 under the assembly pressure to form an air and liquid tight seal.

Support flange 33 by the same pressure is drawn against the outer wall surface 34 covering the elliptical opening and adding to the strength of the final assembly. The flange is installed by first placing sealing means 23 in the elliptical groove 21 on flange 20. The bushing is inserted through the elliptical opening 11 and the flange 20 is pulled against the inner wall 35 with the dimples 25a and 25b located inside the opening 11. Elliptical support flange 33 is fitted over the bushing and the nut 35 is rotated tightly on the threads 31 of bushing 30 drawing all of the parts together in tight sealing engagement with the wall.

Instead of cutting a truly elliptical opening 11, an approximately elliptical opening can be made by cutting a circular hole and extending this on each side of a diameter by a part-circular cut-out.

## Claims

1. A closure assembly comprising a wall member having an opening therein of elliptical or generally elliptical shape, a generally elliptical inner flange (20), an externally threaded member carried centrally by the inner flange (20) and projecting through the opening, a nut on said threaded member, a generally elliptical support flange (33), the inner flange (20) and support flange (33) being on opposite sides of the opening and movable towards each other by said nut, the inner flange (20) being of such size and shape that it can be passed through the opening and rotated to cover the opening characterized in that:

(a) said externally threaded member is a hollow boss (30),

(b) the inner flange is deformed at its margin to form a generally elliptical groove (21) to receive a sealing ring,

(c) the inner flange (20) is a substantially flat plate deformed at spaced apart positions (25a, 25b) between the hollow boss (30) and the groove (21) to form projections which extend into but not through the opening,

(d) the support flange is a flat plate engaging the margin of the opening.

2. The closure assembly of Claim 1 in which the threaded attachment means is a nipple or conduit.

3. The closure assembly of Claim 1 in which the threaded attachment means is a stud.

4. The closure assembly of Claim 1 in which the threaded attachment means is a fastener to receive a bolt.

**Revendications**

1. Dispositif de fermeture, comportant un élément formant cloison et présentant une ouverture de forme elliptique, ou sensiblement elliptique, un flasque intérieur (20) sensiblement elliptique, un élément fileté extérieurement, porté axialement par le flasque intérieur (20) et traversant ladite ouverture, en écrou sur ledit élément fileté, un flasque de support (33) sensiblement elliptique, le flasque intérieur (20) et le flasque de support (33) étant situés de part et d'autre de l'ouverture et étant déplaçables l'un vers l'autre à l'aide dudit écrou, le flasque intérieur (20) ayant des dimensions et une forme telles qu'on puisse le faire passer à travers l'ouverture et le faire tourner pour couvrir l'ouverture, caractérisé par le fait que:

(a) l'élément fileté extérieurement est un bossage creux (30),

(b) le flasque intérieur est déformé dans sa zone marginale pour constituer une gorge (21) sensiblement elliptique de manière à recevoir une bague d'étanchéité,

(c) le flasque intérieur (20) est constitué par une plaque sensiblement plane déformée dans des zones espacées (25A, 25B) entre le bossage creux (30) et la gorge (21) pour constituer des saillies qui s'étendent dans l'ouverture mais sans la traverser,

(d) le flasque de support est constitué par une plaque plane coopérant avec la zone marginale de l'ouverture.

2. Dispositif de fermeture selon la revendication 1, caractérisé par le fait que les moyens filetés d'adaptation sont constitués par un raccord ou un conduit.

3. Dispositif de fermeture selon la revendication 1, caractérisé par le fait que les moyens filetés d'adaptation sont constitués par une tige.

4. Dispositif de fermeture selon la revendication 1, caractérisé par le fait que les moyens filetés d'adaptation sont constitués par un organe de fermeture agencé pour recevoir une tige filetée.

**Patentansprüche**

1. Verschlußanordnung mit einem eine Öffnung einer elliptischen oder im allgemeinen elliptischen Form aufweisenden Wandteil, einem im allgemeinen elliptischen Innenflansch (20), einem äußeren, mit einem Gewinde versehenen Teil, das mittig durch den Innenflansch (20) gehalten wird und durch die Öffnung vorsteht, einer auf dem mit dem Gewinde versehenen Teil befindlichen Mutter und einem im allgemeinen elliptischen Trägerflansch (33), wobei der Innenflansch (20) und der Trägerflansch (33) an gegenüberliegenden Seiten der Öffnung angeordnet sind, und durch die Mutter aufeinanderzu bewegbar sind, wobei der Innenflansch (20) eine derartige Größe und Form aufweist, daß er durch die Öffnung hindurchgeführt und gedreht werden kann, um die Öffnung abzudecken, dadurch gekennzeichnet, daß

a) das äußere mit dem Gewinde versehene Teil ein hohler Vorsprung (30) ist,

b) der Innenflansch an seinem Rand so verformt ist, daß er eine im allgemeinen elliptische Rille (21) zur Aufnahme eines Dichtungsringes bildet,

c) der Innenflansch (20) die Form einer im wesentlichen ebenen Platte aufweist, die an voneinander beabstandeten Positionen (25a, 25b) zwischen dem hohlen Vorsprung (30) und der Rille (21) verformt ist, um Vorsprünge zu bilden, die sich in die Öffnung aber nicht durch die Öffnung erstrecken, und

d) der Trägerflansch eine ebene an dem Rand der Öffnung angreifende Platte ist.

2. Verschlußanordnung nach Anspruch 1, bei der die mit einem Gewinde versehene Befestigungseinrichtung ein Nippel oder ein Rohr ist.

3. Verschlußanordnung nach Anspruch 1, bei der die mit einem Gewinde versehene Befestigungseinrichtung ein Zapfen ist.

4. Verschlußanordnung nach Anspruch 1, bei der die mit einem Gewinde versehene Befestigungseinrichtung ein Halter zur Aufnahme eines Bolzens ist.

0 020 833

*FIG. 1*

*FIG. 2*

*FIG. 3*

1